# FASCICULE DE BREVET EUROPEEN

(11) **EP 0 662 897 B1**
(45) Date de publication et mention de la délivrance du brevet: **27.12.1996**
(21) Numéro de dépôt: 93920912.8
(22) Date de dépôt: 22.09.1993
(51) Int. Cl.: B60T 13/575, B60T 13/569

(54) **SERVOMOTEUR D'ASSISTANCE AU FREINAGE DU TYPE A DEPRESSION**
UNTERDRUCKBREMSKRAFTVERSTÄRKER
VACUUM-TYPE BRAKE SERVO

(30) Priorité: 07.10.1992 FR 9211864
(43) Date de publication de la demande: 19.07.1995
(73) Titulaire: ALLIEDSIGNAL EUROPE SERVICES TECHNIQUES, 93700 Drancy (FR)
(72) Inventeur: GAUTIER, Jean-Pierre, F-93600 Aulnay-sous-Bois (FR); VERBO, Ulysse, F-93600 Aulnay-sous-Bois (FR); PEREZ REVILLA, Miguel, F-95100 Argenteuil (FR)
(74) Mandataire: Bentz, Jean-Paul
(86) Numéro de dépôt international: FR9300916
(87) Numéro de publication internationale: WO9407725

(56) Documents cités:
- US-A- 4 506 592
- US-A- 4 757 748
- US-A- 5 076 142

## Description

La présente invention a pour objet un servomoteur d'assistance au freinage du type à dépression.

Plus précisément, l'invention concerne un servomoteur du type défini dans le préambule de la revendication principale.

Le montage de servomoteur d'assistance au freinage est très répandu dans les véhicules automobiles. Comme cela est bien connu, il permet au conducteur d'actionner le système de frein en exerçant une force bien inférieure à celle qui serait nécessaire en l'absence d'assistance.

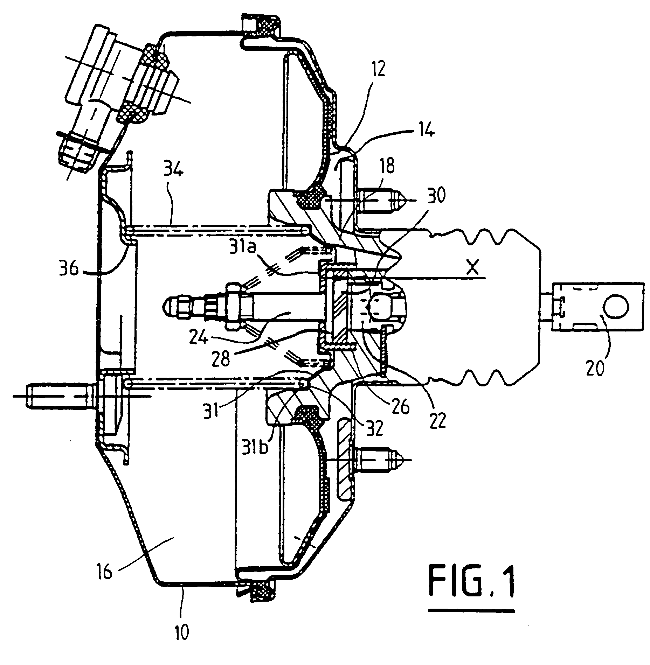

Pour mieux comprendre, l'invention on va d'abord décrire par référence à la figure 1 annexée un servomoteur du type à dépression connu.

Le servomoteur se compose d'une enveloppe 10 dans laquelle est monté un diaphragme déformable 12 qui sépare l'enveloppe en une chambre arrière 14 et une chambre avant 16. La partie centrale du diaphragme est solidaire d'un piston mobile 18 alors que sa périphérie est solidaire de la paroi de l'enveloppe. Le servomoteur est actionné par le conducteur à l'aide d'une tige de commande 20 reliée à la pédale de freinage non représentée. L'extrémité de la tige de commande 20 est reliée à un plongeur 22 qui est monté coulissant à l'intérieur du piston 18. La tige de commande 20 permet par des moyens, non représentés sur la figure, soit de mettre en communication les chambres arrière 14 et avant 16, les deux chambres se retrouvant ainsi en dépression, soit de relier la chambre arrière 14 à une source à la pression atmosphérique afin d'obtenir effectivement le freinage assisté. L'action de freinage est transmise au maître-cylindre, non représenté sur la figure, par l'intermédiaire d'une tige de poussée 24 disposée dans l'enveloppe 10. La tige de poussée 24 dans les systèmes connus est rendue solidaire du piston 18 par l'intermédiaire d'une virole 26 qui est appliquée contre une pièce en forme de disque 28 solidaire d'une extrémité de la tige de poussée et qui est appliquée contre un disque de réaction 30. Comme cela est bien connu, un certain jeu du moins dans la position de repos est laissé entre le plongeur 22 et le disque de réaction 30. La solidarisation de la tige de poussée 24 avec le piston est complétée par une deuxième pièce en forme de virole 31 dont la périphérie interne 31a est en appui sur la première virole 26 et dont la partie périphérique externe 31b est en appui sur une portée 32 du piston 18. En outre, un ressort de rappel 34 a une première extrémité qui est en appui sur une pièce 36 solidaire de la paroi avant de l'enveloppe et une deuxième extrémité qui est en appui sur la périphérie 31a de la deuxième virole 31. On voit qu'ainsi, du fait de la présence de la deuxième virole 32, la tige de poussée 34 ne peut pas être commodément démontée du piston.

Dans la demande de brevet européen EP-A-0 449 703, on a décrit un servomoteur correspondant à celui qui est illustré sur la figure 1 qui comporte des moyens pour régler le saut du servomoteur, c'est-à-dire l'espace x sur la figure 1 qui existe, au repos, entre la face arrière du disque de réaction 30 et la face avant du plongeur 22. On pourra se reporter à la demande de brevet mentionnée ci-dessus pour avoir davantage d'explications sur ce qu'il faut entendre par saut du servomoteur.

Il suffit de comprendre que, pour régler commodément ce saut, il serait intéressant de pouvoir démonter la tige de poussée 24 sans avoir à démonter le reste du servomoteur afin de régler la valeur initiale de la distance x. Or, on voit que, dans le mode de réalisation décrit sur la figure 1, un tel démontage n'est pas possible.

Le servomoteur décrit dans le brevet US-A-5 076 142, et qui correspond au type de servomoteur défini dans le préambule de la revendication principale, présente le même défaut.

Un objet de la présente invention est de fournir un servomoteur d'assistance au freinage du type à dépression dans lequel le démontage de la tige de poussée peut être réalisé aisément, notamment en vue de régler le saut du servomoteur sans que cela modifie de façon significative la construction du servomoteur.

Pour atteindre ce but, le servomoteur d'assistance au freinage du type à dépression qui comporte une enveloppe séparée en deux chambres par un diaphragme déformable, un piston solidaire de la partie centrale dudit diaphragme, un disque de réaction, une tige de poussée disposée dans ladite enveloppe, des moyens de solidarisation de ladite tige de poussée et dudit disque de réaction avec ledit piston et des moyens élastiques appliqués audit piston, se caractérise en ce que les moyens de solidarisation comprennent des moyens formant plaque solidaires d'une extrémité de la tige de poussée, lesdits moyens formant plaque comportant une portion formant virole entourant le disque de réaction et coopérant avec ledit piston et une portion appliquée contre une face dudit disque de réaction et présentant une périphérie et des moyens de fixation présentant une partie formant portée appliquée sur un épaulement dudit piston par lesdits moyens élastiques et une partie de clipsage coopérant avec la périphérie des moyens formant plaque de telle manière que ladite tige et lesdits moyens formant plaque puissent être désolidarisés dudit piston par action sur ladite partie de clipsage.

On comprend qu'ainsi la tige de poussée qui est solidaire des éléments formant plaque peut être aisément désolidarisée du piston du servomoteur simplement en agissant sur les parties de clipsage.

De préférence, les moyens de fixation sont formés d'une seule pièce comportant une partie annulaire formant ladite portée et une pluralité de doigts élastiquement déformables s'étendant à partir de ladite partie annulaire et constituant ladite partie de clipsage, ladite partie annulaire présentant un diamètre interne supérieur au diamètre externe des moyens formant plaque solidaires de la tige de poussée.

D'autres caractéristiques et avantages de la présente invention apparaîtront mieux à la lecture de la description qui suit d'un mode de réalisation de l'invention donné à titre d'exemple non limitatif. La description se réfère aux figures annexées sur lesquelles :
- la figure 1, déjà décrite, est une vue en coupe verticale d'un servomoteur de type connu ;
- la figure 2 est une vue partielle en coupe verticale d'un servomoteur selon l'invention ; et
- la figure 3 est une vue en perspective de la pièce de fixation de la tige de poussée sur le piston.

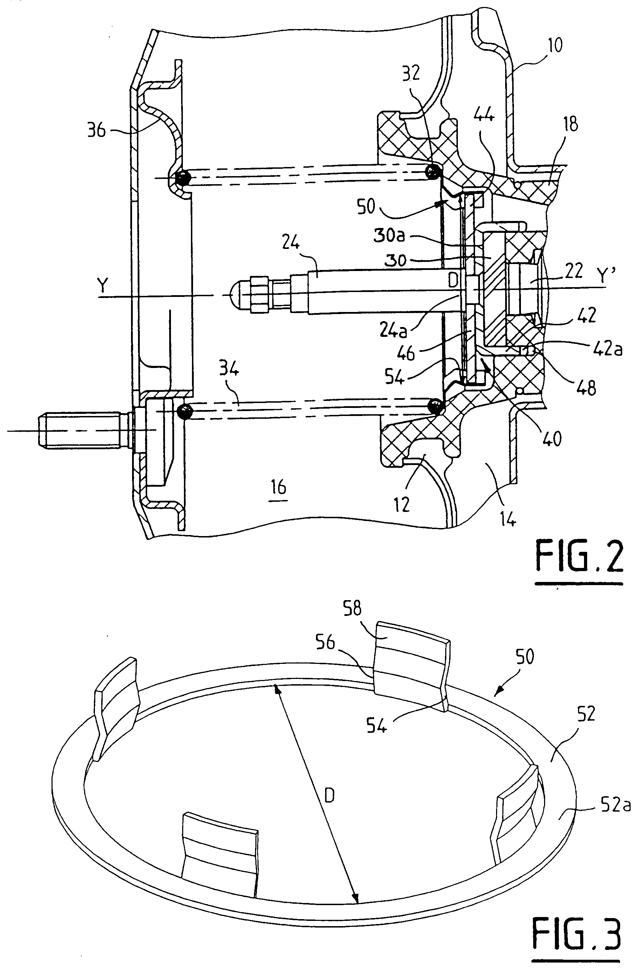

En se référant maintenant aux figures 2 et 3, on va décrire un servomoteur conforme à l'invention. Sur la figure 2, on a repris les mêmes références numériques que sur la figure 1 pour désigner les parties communes. Plus précisément, l'ensemble du servomoteur est identique à celui de la figure 1 à l'exception des moyens de solidarisation de la tige de poussée 24 avec le piston 18.

Les moyens de solidarisation de la tige de poussée 24 avec le piston 18 se composent d'un premier ensemble 40 constitué par une pièce en forme de jupe 42 et une pièce en forme de disque plan 44 qui sont toutes deux solidaires de l'extrémité 24a de la tige de poussée 24. La pièce en forme de jupe 42 comporte un fond 46 qui est appliqué contre la face avant 30a du disque de poussée 30. La pièce en forme de jupe 42 présente bien sûr un bord libre 42a qui pénètre dans une gorge 48 ménagée dans le piston. La gorge 48 et les deux pièces 42 et 44 présentent une symétrie de révolution autour de l'axe YY' de la tige de poussée 24. On comprend que la coopération entre la pièce en forme de jupe 42 et la gorge 48 assure le centrage de la tige de poussée 24 par rapport au piston 18. La solidarisation effective de la tige de poussée avec le piston est obtenu à l'aide d'une virole de clipsage 50. Comme cela apparaît plus clairement sur la figure 3, la virole 50 est constituée par une partie annulaire 52 disposée dans un plan orthogonal à l'axe YY'. En outre, le diamètre interne D de la partie annulaire 52 est supérieur au diamètre D' du disque 44. De la face postérieure 52a de l'anneau 52 font saillie des doigts ou ergots de clipsage tels que 54 élastiquement déformables qui s'étendent sensiblement selon la direction de l'axe YY'. Ces doigts de clipsage comportent une portion coudée 56 et une portion active 58.

Si l'on revient maintenant à la figure 2, on voit que les portions actives 58 des ergots de clipsage 54 sont en appui sur la périphérie du disque 44 ; on voit également que la partie annulaire 52 de la pièce 50 est en appui sur l'épaulement 32 du piston 18. Comme dans le cas du servomoteur antérieur décrit en liaison avec la figure 1, le ressort de rappel 54 maintient la pièce 50 contre le piston 18 lors des déplacements de celui-ci sous l'effet des différences de pression entre les chambres arrière 14 et avant 16.

On comprend qu'ainsi la tige de poussée 24 est effectivement solidaire du piston 18 et du disque de réaction 30 par l'intermédiaire de la pièce 50 qui, d'une part, est solidaire du disque 44 et, d'autre part, est maintenue sur l'épaulement 32 du piston par le ressort 34. Cependant, on comprend qu'en agissant à l'aide d'un outil sur les doigts ou ergots de clipsage 54 de la pièce 50, il est possible d'extraire l'ensemble constitué par la tige de poussée 24 et les pièces 42 et 44 qui lui sont solidaires. On peut alors procéder aux différents réglages de saut du servomoteur qu'il est souhaitable d'effectuer ou de procéder par exemple au remplacement du disque de réaction 30.

## Revendications

1. Servomoteur d'assistance au freinage du type à dépression comportant une enveloppe (10) séparée en deux chambres (14, 16) par un diaphragme déformable (12), un piston (18) solidaire de la partie centrale dudit diaphragme, un disque de réaction (30), une tige de poussée (24) disposée dans ladite enveloppe, des moyens de solidarisation de ladite tige de poussée et dudit disque de réaction avec ledit piston et des moyens élastiques (34) appliqués audit piston, les moyens de solidarisation comprenant d'une part des moyens formant plaque (40) solidaires d'une extrémité (24a) de la tige de poussée, lesdits moyens formant plaque comportant une partie formant virole (42) entourant le disque de réaction et coopérant avec ledit piston et une portion (44) appliquée contre une face dudit disque de réaction et présentant une périphérie et d'autre part des moyens de fixation (50) présentant une partie formant portée (52) appliquée sur un épaulement dudit piston par lesdits moyens élastiques et une partie de clipsage (54) coopérant avec la périphérie des moyens formant plaque de telle manière que ladite tige et lesdits moyens formant plaque puissent être solidarisés dudit piston par action sur ladite partie de clipsage, caractérisé en ce que la partie de clipsage est conformée pour permettre à la tige d'être désolidarisée du piston.

2. Servomoteur selon la revendication 1, caractérisé en ce que lesdits moyens formant virole (42) comportent un bord libre (42a) qui pénètre dans une gorge (48) ménagée dans ledit piston.

3. Servomoteur selon la revendication 2, caractérisé en ce que lesdits moyens de fixation sont formés d'une seule pièce comportant une partie annulaire (52) formant ladite portée et une pluralité de doigts (54) élastiquement déformables s'étendant à partir de ladite partie annulaire et constituant ladite partie de clipsage, ladite partie annulaire présentant un diamètre (D) interne supérieur au diamètre externe (D') des moyens formant plaque.

## Claims

1. Brake-booster of the partial vacuum type comprising a casing (10) separated into two chambers (14, 16) by a deformable diaphragm (12), a piston (18) securely attached to the central part of said diaphragm, a reaction disk (30), a thrust rod (24) disposed in said casing, means for securely attaching said thrust rod and said reaction disk to said piston and resilient means (34) applied to said piston, the attachment means comprising, on the one hand, plate-forming means (40) securely attached to one end (24a) of the thrust rod, said plate-forming means comprising a ring-forming part (42) surrounding the reaction disk and interacting with said piston and a portion (44) applied against one face of said reaction disk and having a periphery and, on the other hand, fastening means (50) having a part forming a bearing surface (52) applied onto a step of said piston by said resilient means and a clipping part (54) interacting with the periphery of the plate-forming means in such a manner that said rod and said plate-forming means can be securely attached to said piston by action on said clipping part, characterized in that the clipping part is shaped in order to allow the rod to be detached from the piston.

2. Booster according to Claim 1, characterized in that said ring-forming means (42) comprise a free edge (42a) which enters a groove (48) made in said piston.

3. Booster according to Claim 2, characterized in that said fastening means are formed in one single piece comprising an annular part (52) forming said bearing surface and a plurality of resiliently deformable fingers (54) extending from said annular part and constituting said clipping part, said annular part having an inner diameter (D) greater than the outer diameter (D') of the plate-forming means.

## Patentansprüche

1. Unterdruck-Servomotor zur Bremsunterstützung, mit einem Gehäuse (10), das durch eine verformbare Trennwand (12) in zwei dichte Kammern (14, 16) unterteilt ist, einem Kolben (18), der fest mit dem Mittelabschnitt der Trennwand verbunden ist, einer Reaktionsscheibe (30), einer in dem Gehäuse angeordneten Schubstange (24), Mitteln zur Befestigung der Schubstange und der Reaktionsscheibe an dem Kolben sowie an dem Kolben anliegenden elastischen Mitteln (34), wobei die Befestigungsmittel zum einen Mittel enthalten, die eine Platte (40) bilden und fest mit einem Ende (24a) der Schubstange verbunden sind, wobei die die Platte bildenden Mittel einen Abschnitt aufweisen, der einen Ring (42) bildet, welcher die Reaktionsscheibe umschließt und mit dem Kolben zusammenwirkt, sowie einen Bereich (44), der an einer Fläche der Reaktionsscheibe anliegt und einen Umfang aufweist, und zum anderen Befestigungsmittel (50), die einen Abschnitt aufweisen, der eine Anlage (52) bildet, die an einen Absatz des Kolbens durch die elastischen Mittel angelegt ist, sowie einen Einklips-Abschnitt (54), der mit dem Umfang der die Platte bildenden Mittel so zusammenwirkt, daß die Stange und die die Platte bildenden Mittel mit dem Kolben durch Einwirken auf den Einklips-Abschnitt verbunden werden können, dadurch gekennzeichnet, daß der Einklips-Abschnitt so gebildet ist, daß er ermöglicht, die Stange von dem Kolben zu lösen.

2. Servomotor nach Anspruch 1, dadurch gekennzeichnet, daß die den Ring (42) bildenden Mittel einen freien Rand (42a) aufweisen, der in eine Nut (48) eindringt, die in dem Kolben gebildet ist.

3. Servomotor nach Anspruch 2, dadurch gekennzeichnet, daß die Befestigungsmittel aus einem einzigen Teil gebildet sind, das einen ringförmigen Abschnitt (52) aufweist, der die Anlage bildet, sowie mehrere Finger (54), die elastisch verformbar sind, sich ausgehend von dem ringförmigen Abschnitt erstrecken und den Einklips-Abschnitt bilden, wobei der ringförmige Abschnitt einen Innendurchmesser (D) aufweist, der größer als der Außendurchmesser (D') der die Platte bildenden Mittel ist.
